# EUROPEAN PATENT APPLICATION

(11) **EP 3 168 905 A1**
(43) Date of publication of application: **17.05.2017**
(21) Application number: 15382557.5
(22) Date of filing: 10.11.2015
(51) Int. Cl.: H01M 4/133, H01M 4/136, H01M 4/1393, H01M 4/1397, H01M 4/36, H01M 4/38, H01M 4/587, H01M 4/66, H01M 10/052, H01M 4/62

(54) **CARBON COMPOSITES**

(71) Applicant: Grabat Energy, S.L., 28010 Madrid (ES)
(72) Inventor: MORALES PALOMINO, Julián, E-14071 Córdoba (ES); CABALLERO AMORES, Alvaro, E-14071 Córdoba (ES)
(74) Representative: ABG Patentes, S.L.

(57) **Abstract**

The present invention relates to composites comprising a fibrous graphitic porous matrix containing mesopores with an average size of between 2 and 50 nm, and micropores with an average size of below 2 nm, and elemental sulphur placed into the pores of the porous matrix. The invention also relates to processes for preparing the composite including physical and chemical methods as well as mechanical methods using dry and wet conditions. The composites described are particularly useful in electrodes for lithium-sulphur batteries.

## Description

### FIELD OF THE ART

The present invention relates to composites comprising graphitic materials and sulphur and processes for their preparation. The composites provided by the present invention are particularly useful as electrodes in lithium-sulphur batteries.

### BACKGROUND

Lithium-ion (Li-ion) batteries have been intensely studied because of their properties such as stable electrochemistry and long lifespan, making them useful for applications in portable electronic devices. However, Li-ion batteries present some drawbacks including their limited capacity, high cost, and safety concerns. The lower specific capacities of the cathode materials (-150 mAh/g for layered oxides and -170 mAh/g for LiFePO₄) compared to those of the anode materials (370 mAh/g for graphite and 4200 mAh/g for Si) have been a limiting factor to the energy density of these batteries. Thus, it is highly desirable to develop and optimize high capacity cathode materials for rechargeable lithium batteries. In this sense, lithium sulphur (Li-S) batteries having a much higher energy density than the Li-ion, have been increasingly attracting worldwide attention in recent years. Sulphur is a promising cathode material with a theoretical specific capacity of up to 1675 mAh/g, and energy density of 2600Wh kg⁻¹, that is from 3 to 5 times higher than those of traditional cathode materials based on transition metal oxides or phosphates. Sulphur also possesses other advantages such as being abundant in various minerals, cheap, and environmental friendly.

Elemental Sulphur (**S₈**) reacts with Lithium in a reduction process with the transfer of 2 electrons, forming at the end of the process the sulfide **Li₂S**. However, the redox reactions of Lithium and sulphur are complex and can include multiple steps involving the formation of different polysulfides:
**S₈** + 2Li⇄Li₂S₈
Li₂S₈+2Li⇄2Li₂S₄
Li₂S₄+2Li⇄2Li₂S₂
Li₂S₂ +2Li ⇄2 **Li₂S**

In spite of the considerable advantages of using sulphur as cathode material, there are still some challenges facing Li-S batteries, such as the low electrical conductivity of pure sulphur (5x10⁻³⁰ S cm⁻¹ at 25°C), its low specific capacity, low energy efficiency and short cycle life because of the high solubility of the polysulfide ions formed during the discharge-charge processes. These soluble polysulfide ions, once formed, migrate to the Li anode where they are reduced, precipitating as insoluble sulfides, which insulate the anode. As a result the resistance of the anode surface increases, shortening the cycle life of the cathode. In the reverse charging process, the precipitated insoluble sulfides will partly be converted to polysulfide ions, and will diffuse back to the cathode. During repeated charging/discharging cycles, the insoluble sulfides (Li₂S and Li₂S₂) will be continuously depositing onto the surface of both electrodes, eventually leading to the fading of the capacity of the cell. This process, known as polysulfide shuttle, reduces the utilization of active materials at the electrodes and shortens battery life.

Additionally, sulphur has a density of 2.07 g/cm³ and Li₂S of 1.66 g/cm³, i.e the difference in volume between both compounds is of about 80%. The large volume expansion of sulphur during the charge may trigger the separation of active sulphur from the electrode after repeating charging/discharging cycles and its resulting changes in volume, and the loss of electric contact between particles.

In the last decades several attempts such as the optimization of the electrolytes, preparation of novel active electrodes, dispersion of sulphur into a conductive polymer, and fabrication of carbon-sulphur composites, have been made to overcome the above mentioned challenges. Carbon-based materials including porous carbon, carbon nanotubes, carbon nanofibers, and porous hollow carbon have been proved effective in improving the conductivity of sulphur and reducing the diffusion of polysulfides. Among the carbon-based materials, graphitic materials, including graphene, are useful candidates to immobilize sulphur due to their large surface area, chemical stability, high electrical conductivity and mechanical strength, overcoming the low conductivity of sulphur for electrochemical energy storage applications.

Wang et al. reported in 2010 sulphur-graphene composites prepared by the heat treatment of the mixture of graphene sheets and elemental sulphur [J. Power Sources, vol.196, no. 16, pages 7030-7034, 2011]. The disclosed composite exhibits a specific capacity of 600 mAh/g after 40 cycles at a current density of 50 mA/g.

Cao et al. reported an improved method of preparing S-graphene by mixing graphene with a sulphur solution [Phys. Chem. Chem. Phys., 2011, vol.13, no.17, pages 7660-7665]. The composites with a sandwich structure show a specific capacity of 750 mAh/g after 50 cycles at a current density of 168 mA/g.

Further Wang et al. reported graphene-wrapped sulphur particles as a rechargeable lithium-sulphur battery cathode material [Nano Lett., 2011, vol. 11, p. 2644-2647]. The disclosed composite material is prepared by wrapping polyethylene glycol (PEG) coated submicrometer sulphur particles with mildly oxidized graphene oxides sheets decorated with carbon black nanoparticles. The PEG and graphene coating layers accommodate volume expansion of the coated sulphur particles during discharge, trapping soluble polysulfides intermediates and rendering the sulphur particles electrically conducting.

Likewise, Xu et al. disclosed graphene-encapsulated sulphur composites with a core-shell structure as cathode materials for lithium-sulphur batteries [J. Mater. Chem. A, 2013, 1, 15142-15149].

Guang He et al. [Chem. Mater. 2014, 26, 13, p. 3879-3886] prepared highly ordered hexagonal mesoporous carbon nanofibers with a high surface area (1928 m²/g) and bimodal porosity for lithium-sulphur batteries. The disclosed highly ordered mesoporous carbon nanofibers are prepared by a two-step casting process wherein a silica or alumina template is filled with a surfactant-templated precursor solution, and etched with an acid to release the bimodal mesoporous carbon nanofibers. In addition to its very complex preparation, the uniformity and size of the pores (in two sizes within the mesoporous range: around 5.5 nm and 8-10 nm) is not adequate for polysulfide retention in the cathode. Further, volume changes of sulphur are restricted during the charge/discharge cycles due to the confinement effect in the highly ordered host structure disclosed.

Although many attempts have been made to prepare cathodes of graphitic materials-sulphur composites for rechargeable lithium-sulphur batteries, there remains a need in the art for improved electrodes comprising electroactive sulphur materials having a high specific capacitance, high durability, low cost, improved safety, and low environmental impact.

### SUMMARY OF THE INVENTION

The object of the present invention is to provide a composite comprising sulphur showing high conductivity, high specific capacity and high durability with the number of charge-discharge cycles, so that it can be advantageously used as an electrode in lithium batteries. Additionally, the low-cost, environmentally friendly composite provided in the present invention has outstanding electrochemical properties and is a highly suitable material for the next generation of lithium batteries.

Thus, in a first aspect the present invention relates to a composite obtainable by placing sulphur into the pores of a porous graphitic matrix comprising mesopores with an average size of between 2 and 50 nm, and micropores with an average size of below 2 nm, wherein the graphitic matrix before loading with sulphur has a specific surface area comprised between 100 and 500 m²/g.

The graphitic porous matrix used for the composite of the invention has a combination of mesopores and micropores that immobilizes sulphur of different sizes and efficiently accommodates the volume changes during the charge/discharge cycles. The specific surface area of the graphitic porous matrix generated by the combination of pore sizes, together with the high conductivity of the graphitic structure that forms the matrix of the composite, allow a high ion diffusion and charge transference when it is used in an electrode. In addition, the combination of micropores and mesopores of the graphitic matrix allows not only to host sulfur of different sizes, but also confine the polysulfide species so that their dissolution is inhibited during charging/discharging processes.

Another advantage of the composite of the invention is that the intimate contact between the graphitic porous matrix, having two very different type of pores, and the sulphur offers a low internal resistance enabling a rapid charge transport through the composite, providing an electrode with a high conductivity and specific capacitance.

In a second aspect the invention relates to a composite paste comprising the composite of the invention, a conductive additive, and a binder.

In third aspect, the invention relates to an electrode comprising the composite defined above and a metallic support, and to a battery comprising the composite in the cathode.

In a further aspect, the invention provides processes to obtain the composite of the invention, and a process to prepare an electrode thereof.

### FIGURES

Figure 1: a) is a Scanning Electron Microscope (SEM) Image of an exemplary composite of the invention comprising a graphitic porous matrix and elemental sulphur placed into the pores of the porous matrix.
Figure 2: a) is the thermogravimetric analysis (TGA), and b) is the corresponding X-Ray Diffractogram of a composite of the invention.
Figure 3: a) Discharge-charge specific capacity profile, and b) cycle performance of a composite comprising a graphitic porous matrix of carbon nanofibers having 80 nm average diameter and showing mesopores and micropores, and particles of elemental sulphur placed into the pores of the matrix.
Figure 4: a) Discharge-charge specific capacity, and b) cycle performance of a composite comprising a fibrous graphitic porous matrix of carbon nanofibers having 20 nm average diameter and showing mesopores and micropores, and particles of elemental sulphur placed into the pores of the porous matrix.

### DETAILED DESCRIPTION OF THE INVENTION

The present invention relates to a composite obtainable by placing sulphur into the pores of a porous graphitic matrix comprising mesopores with an average size of between 2 and 50 nm, and micropores with an average size of below 2 nm, wherein the graphitic matrix before loading with sulphur has a specific surface area comprised between 100 and 500 m2/g.

In the context of the present invention by the term "composite" it is understood a material made of two distinct compounds. In particular, the composite of the invention comprises a disordered and porous matrix of graphitic material and a filler of sulphur placed into the pores of the matrix.

### Graphitic material

As used herein, the term " porous graphitic matrix" means, without limitation, graphitic materials having form of fiber.

By the term "disordered" it is understood lacking of order, that is, a repeated pattern is not found in the structure.

In the context of the present invention, the term "graphitic matrix" refers to materials having a structure formed by the stacking of graphene layers of single atomic carbon. Particularly, the graphitic matrix used as starting material to form the composite of the invention are selected from carbon nanofibers, carbon nanorods, carbon nanowires, carbon nanotubes, and combinations thereof. In a preferred embodiment, the graphitic materials are selected from carbon nanofibers.

Preferably, the porous graphitic materials which are used to prepare the composite of the invention have an average diameter of at least 5 nm, preferably an average diameter comprised between 5 and 200 nm, more preferably between 10 and 150 nm, more preferably between 20 and 150 nm, even more preferably between 20 and 100 nm. In a preferred embodiment the graphitic materials used to prepare the composite of the invention presents an average diameter of 60 to 90 nm, preferably of about 80 nm.

Further, the porous graphitic matrix which is used to prepare the composite of the invention presents a length comprised between 200 nm and 10 µm, preferably between 300 nm and 5 µm, more preferably between 500 nm and 5 µm, even more preferably between 500 nm and 3 µm.

In a preferred embodiment, the porous graphitic materials which are used to prepare the composite of the invention present an average diameter of between 5 and 200 nm and a length comprised between 500 nm and 5 µm.

In a particular embodiment, the porous graphitic matrix is carbon nanofibers. In the context of the present invention, carbon nanofibers are cylindrical nanostructures with graphene layers arranged as stacked cones, cups or plates, having an aspect length/diameter ratio of greater than 10, and a maximum diameter of 100 nm. In a preferred embodiment, the graphitic matrix which is used to prepare the composite of the invention are carbon nanofibers having an average diameter of about 60 to about 90 nm and a length of between 500 nm and 3 µm.

Unlike carbon nanotubes, carbon nanofibers are not tubular structures since they lack an internal cavity all along the length of their structure which includes openings at both ends. However, they can have a cavity in their structure, which contributes in the placing of sulphur particles. In a particular embodiment, the graphitic matrix which is used to prepare the composite of the invention include carbon nanofibers having at least an internal cavity, opened in one of the two ends of the carbon nanofiber.

The average diameters and lengths of the porous graphitic material which are used to prepare the composite of the invention are measured by Transmission Electron Microscopy (TEM).

In the context of the present invention, the porous graphitic matrix which is used to prepare the composite of the invention has internal pores in their structure: mesopores with an average size of between 2 and 50 nm, and micropores with an average size of below 2 nm.

In a particular embodiment, the mesopores in the porous graphitic matrix have an average size of between 1 and 40 nm, preferably of between 2 and 30 nm, more preferably of between 3 and 15 nm, even more preferably of between 3 and 10 nm. In a preferred embodiment, the mesopores in the graphitic porous matrix have an average size of about 3-8 nm, preferably of about 5 nm.

The micropores in the porous graphitic matrix have an average size of below 2 nm. Preferably, the micropores in the fibrous graphitic matrix have an average size of between 0.5 and 2.0 nm, more preferably of between 1.0 and 1.5 nm.

As used herein, the term "pores" refers to mesopores and micropores.

The porous graphitic matrix containing mesopores with an average size of between 2 and 50 nm, and micropores with an average size of below 2 nm, preferably shows a pore volume comprised between 0.2 and 1.0 cm³/g, more preferably between 0.2 and 0.8 cm³/g, even more preferably between 0.2 and 0.5 cm³/g, and even more preferably of about 0.4 cm³/g.

Once the composite is formed by placing the sulphur in the pores, the pore volume is drastically reduced by the presence of sulphur in the pores, resulting in a pore volume of about 0.0001 and 0.01 cm³/g which is in the range of a material practically nonporous.

In another particular embodiment, the porous graphitic matrix used to prepare the composite of the invention contains between 85 and 98% of mesopore volume, and between 15 and 2% of micropore volume with respect to the pore volume of the porous graphitic matrix. More preferably, the porous graphitic matrix of the composite contains about 90-95 % of mesopore volume and about 10-5% of micropore volume.

The specific surface area of the fibrous graphitic porous matrix of the composite of the invention allows an efficient dispersion of sulphur, as well as the volume expansion/shrinkage of sulphur during repeated discharge-charge cycles. In the context of the present invention, the term "specific surface area (SSA)" refers to the total surface area of a material per unit of mass. In particular, the specific surface area of the porous graphitic matrix used to prepare the composite of the invention is comprised between 100 and 500 m²/g, preferably between 200 and 400 m²/g, even more preferably the specific surface area of the graphitic matrix is about 250-350 m²/g.

In terms of specific area, the mesopores preferably represent between 80% and 95%, more preferably 85% to 95%, of the specific area, and the micropores represent between 20% and 5%, more preferably beween 15% and 5% of the specific area.

Once the composite is formed, the specific surface area is also drastically reduced by the presence of sulphur, resulting in a specific surface area of from about 0.1 to about 10 m²/g, preferably of from about 0.5 to about 5 m²/g, more preferably between from about 0.5 to about 2 m²/g.

The properties of porosity and specific surface area described in the present application are measured using the Barrett-Joyner-Halenda ("BJH") and Brunnauer-Emmet-Teller ("BET") methods, respectively, applied in physical adsorption technique using nitrogen as the adsorptive material, which is well known to the person skilled in the art as can be seen in the references cited above.

The porous graphitic matrix with properties as defined above can be prepared by methods known in the art, such as by growing from the catalytic decomposition of hydrocarbons over metal catalyst, by Chemical Vapor Deposition (CVD), by micromechanical exfoliation of graphite, by silicon sublimation in silicon carbide, by unrolling carbon nanotubes, or by reduction of graphitic oxide [C. Soldano, A. Mahmood, E. Dujardin, Carbon 48 (2010) 2127-2150, Y. Zhu, S. Murali, W. Cai, X. Li, J. W. Suk, J. R. Potts, R. S. Ruoff, Adv. Mater. 22 (2010) 3906-3924]. In addition, other techniques known in the art include electrochemical anodization, freeze drying, sol-gel chemistry, self-assembly, three-dimensional (3-D) printing, and atomic layer deposition. Most of these methods are based upon templating and phase separation, typically combined with dissolution/extraction, etching, and high-temperature calcination or pyrolysis to generate pores via selective removal of the sacrificial component(s).

Electrospinning is a simple and known process for fabricating graphitic materials including carbon nanofibers suitable for preparing the composite of the invention [Yaodong Liu & Satish Kumar (2012), Polymer Reviews, 52:3-4, 234-258]. A typical electrospinning setup consists of a metallic spinneret, a syringe pump, a high-voltage power supply, and a grounded collector in a humidity controlled chamber. A polymer solution, polymer melt or a sol-gel solution is continuously pumped through the spinneret at a constant rate, while a high-voltage gradient is applied between the spinneret tip and the collector substrate. The solvent continuously and rapidly evaporates while the jet stream is whipped and stretched by electrostatic repulsion forming solidified continuous nanofibers (diameters 20-500 nm) on the grounded collector. Carbon nanofibers are fabricated by subjecting electrospun nanofibers of an appropriate polymer precursor to stabilization and carbonization processes. Cellulose, phenolic resins, polyacrylonitrile (PAN), polybenzimidazol, and pitch-based materials may be used as a polymer precursor to produce carbon nanofibers. A number of methods have been developed for generating pores in individual electrospun nanofibers, and they can be broadly divided into two strategies: i) employment of a proper post treatment (e.g., solvent extraction and calcination) and ii) manipulation of polymer-solvent phase separation. In general, the method based upon selective removal of a sacrificial component is the most straightforward and versatile route to generating porous nanofibers. Ji et al. [Journal of Polymer Science Part B: Polymer Phys. 47 (2009) 493-503.] report porous carbon nanofibers prepared by carbonizing electrospun PAN/poly(L-lactide) nanofibers. The reported carbon nanofibers present irregular thin long interior pores and a specific surface area of 359 m²/g. Zhang and Hsieh [L. Zhang et al., European Polymer Journal 45 (2009) 47-56] electrospun binary solutions of PAN with three different sacrificial polymers, poly(ethylene oxide), cellulose acetate, and poly(methylmethacrylate) (PMMA). Upon removal of the second polymer and subsequent carbonization, different features such as grooved, hollow, U-shaped, or collapsed fibers were observed. Similarly, Kim et al. reported porous CNFs with hollow cores obtained by electrospinning PAN and PMMA [C. Kim et al., Small 3 (2007) 91-95].

In the composite provided by the present invention, the porous graphitic matrix used for the composite of the invention, characterized by the pore combination and sepcfic surface area provides a high mechanical strength, a high conductivity throughout the thickness of the composite, and especially high adaptability for compression and expansion during electrochemical cycling. Moreover, even though the values of the specific surface area of the fibrous graphitic porous matrix of the composite of the invention are not so high as the values reported by Guang He et al. [Chem. Mater. 2014, 26, 13, p. 3879-3886], the composite of the invention unexpectedly provides a high conductivity, a high specific capacitance and a high durability when used as an electrode.

### Sulphur

The composite of the invention further comprises sulphur placed into the pores of the fibrous graphitic porous matrix.

In the context of the present invention, the term "sulphur" refers to elemental sulphur or sulphur-containing compounds.

In the context of the present invention, the term "elemental sulphur" refers to polyatomic molecules of sulphur in the form of powder. In a preferred embodiment the sulphur in the composite of the invention is elemental sulphur.

In a preferred embodiment, the elemental sulphur comprises S₈ molecules in the form of powder. The elemental sulphur powder preferablycontains sulphur particles having an average diameter from 1 to less than 50 nm, more preferably between 1 and 20 nm, even more preferably between 1 and 10 nm. In a preferred embodiment the sulphur particles have an average diameter of 5 nm.

In the context of the present invention, the term "sulphur containing compounds" refers to organosulphur compounds or inorganic sulphur compounds such as Lithium sulfide.

In the composite of the invention, preferably between 30 and 70% wt. of sulphur is placed into the pores of the porous graphitic matrix. The expression "wt." means weight of the sulphur in relation to the total weight of the composite. In a particular embodiment, between 40 and 60% wt. of sulphur is placed into the pores of the porous graphitic matrix, more preferably, about 40%-50% wt of sulphur is placed into the pores. The weight ratio of sulphur in the composite of the invention is measured by thermogravimetric analysis under inert atmosphere.

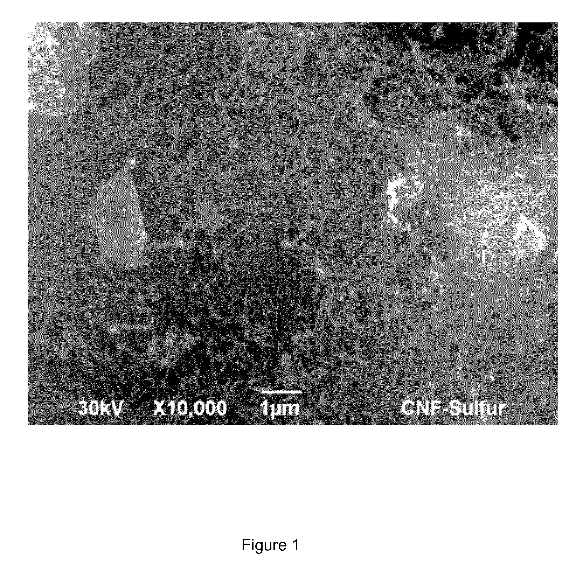

A scanning electron microscopy (SEM) image of an exemplary composite of the present invention is shown in Figure 1. The image shows a composite of the invention comprising a porous graphitic matrix of carbon nanofibers, and sulphur placed into the pores of the porous matrix.

In a preferred embodiment, the composite of the invention does not contain polymers. The porous graphitic matrix used in the invention, due to its high flexibility and morphology, offers a high tolerance to the volume change of the elemental sulphur during the charge/discharge cycles, without requiring the presence of polymers to accommodate the volume expansion/shrinkage effects.

### Composite paste

The present invention also relates to a composite paste or slurry comprising the composite of the invention. Thus, an aspect of the invention is directed to a composite paste comprising the composite of the invention, a conductive additive, and a binder.

In a preferred embodiment, the composite paste of the invention comprises from about 60 to 98% w/w of the composite, from about 1 to 20% w/w of a conductive additive, and from about 1 to 20% w/w of a binder.

In a particular embodiment, the composite paste of the invention further includes graphene oxide. Preferably, the composite paste comprises between 0.5 to 5% wt. of graphene oxide.

As used herein, the terms "conductive additives" refers to additives that provide electrical connectivity to the electroactive materials in the composite cathode. Useful conductive additives are known to one skilled in the art of electrode fabrication, and include, but are not limited to, conductive carbons, graphites, active carbon fibers, metal flakes, metal fibers, and electrically conductive polymers. Preferably, the conductive additive in the composite paste of the invention is carbon black.

The composite paste according to the present invention comprises about 1-20%, preferably 5-15%, more preferably 8-12% w/w of a conductive additive.

The choice of polymeric binder material may vary greatly so long as it is inert with respect to the composite cathode materials. Useful binders are those materials that allow the easy processing of battery electrode composites, and are generally known to those skilled in the art of electrode fabrication. Examples of useful binders include, but are not limited to, organic polymers such as polytetrafluoroethylenes (PTFE), polyvinylidene fluorides (PVDF), polyvinylpirrolidone (PVP), ethylene-propylene-diene (EPDM) rubbers, polyethylene oxides (PEO), carboximethylcellulose (CMC), UV curable acrylates, UV curable methacrylates, and heat curable divinyl ethers. Preferably, the binder in the composite paste is selected from poly(vinylidene) fluoride and politetrafluoroethylene (PTFE).

The composite paste according to the present invention comprises about 1-20%, preferably 5-15%, more preferably 8-12% w/w of a binder.

### Electrode

In another aspect the invention relates to an electrode comprising the composite paste of the invention and a metallic support. In a particular embodiment, the metallic supports are selected from metal films, foils, nets and expanded metal grids. Preferably, the metal in the metallic support include but is not limited to nickel, titanium, aluminum, copper, tin, and stainless steel. More preferably, the metallic support is an aluminum support.

In a particular embodiment, the electrode of the invention comprises the composite paste and a metallic support, wherein the metallic support is coated by the composite paste of the invention.

In a preferred embodiment, the electrode of the invention comprises the composite paste and an aluminum foil, wherein the aluminum foil is coated by the composite of the invention. Preferably, the aluminum foil has from about 10 µm to about 30 µm thickness, more preferably about 20 µm.

The composite of the invention can be applied to the metallic support by any of a variety of well-known coating methods, and dried using conventional techniques. Suitable coating methods include, but are not limited to, the use of a roller coating, gravure coating, curtain coating, bead coating or slot extrusion coating. Further, suitable methods for drying include, but are not limited to, hot air condition, heat, infrared radiation, flowing gases, vacuum, reduced pressure, extraction, and air drying. Preferably, the composite applied to the metallic support is dried by an airless gun.

### Battery

The electrode comprising the composite of the invention may be used in a battery. Thus, in one embodiment the invention relates to the use of the composite of the invention as electrode for batteries.

In a particular embodiment, the invention relates to the use of the composite of the invention in an electrode for batteries, wherein the batteries are lithium batteries or lithium ion batteries. In a preferred embodiment, the invention relates to lithium batteries or lithium ion batteries comprising a cathode comprising the composite of the invention and an anode comprising lithium.

The battery comprising the composite of the invention further comprises an electrolyte interposed between said anode and said cathode in the battery. The electrolytes used in the battery cells separate the anode and the cathode and function as a medium for storage and transport of ions. The electrolyte must also be electronically nonconductive to prevent short circuiting between the anode and the cathode. In the case of Li-S cells, the electrolyte is particularly selected due to the high chemical reactivity of polysulfides and metallic lithium, and to the poor electrochemical kinetics of sulphur and lithium sulfide. Examples of useful electrolytes in the battery include, but are not limited to, liquid, solid, or solid-like materials capable of storing and transporting ions, so long as the electrolyte material is stable electrochemically and chemically with respect to the composite cathode material, and the electrolyte material facilitates the transport of ions.

Examples of useful liquid electrolyte solvents include but are not limited to ether-based electrolytes selected from 1,2-dimethoxiethane (DME), 1,3 dioxolane (DOL), polyethylene glycol dimethyl ethers (PEDGME), diethylene glycol dimethyl ethers, triethylenglycol dimethyl ethers, tetraethylenglycol dimethyl ether (TEGDME), 2-ethoxyethyl ether (EEE) and tetrahydrofuran. Other examples of useful liquid electrolyte solvents include but are not limited to carbonate-based electrolytes selected from ethylene carbonate (EC), propylene carbonate (PC) and diethyl carbonate (DEC). Liquid electrolytes having low surface tensions and low viscosities provide electrolyte with good wettability to obtain a favorable contact between electrolyte and the electrode.

Examples of useful liquid electrolyte solvents include but are not limited to ionic liquid based electrolytes selected from Py14TFSI and PP13-TFSI.

The electrolyte further comprises lithium salts having a high chemical and electrochemical stability, considerable solubility, and a high degree of dissociation in specific solvent to ensure good ion conductivity. Examples of lithium salts include but are not limited to lithium perchlorate (LiClO₄), Lithium Hexafluorophosphate (LiPF₆), lithium trifluoromethanesulfonate (LiCF₃SO₃, LiTFS), and lithium bis(trifluoromethanesulfonyl)imide (LiTFSI).

The electrolyte may further comprise additives protecting the lithium anode and enhancing the solubility and stability of polysulfides. In particular, exemplary additives include but are not limited to LiNO₃, P₂S₅ and polysulfides.

Examples of useful solid electrolytes include but are not limited to solid polymer electrolytes selected from poly(ethylene oxide) (PEO), poly(propylene oxide) (PPO), polyacrylonitrile (PAN), poly(methyl methacrylate) (PMMA), PVC, poly(vinylidene fluoride) (PVDF), and poly(vinylidene fluoride)-hexafluoropropylene (PVDF-HFP).

### Processes to prepare the composite of the invention

One aspect of the present invention relates to a process to prepare the composite of the invention, comprising the step of placing sulphur into the pores of the porous graphitic matrix containing mesopores with an average size of between 2 and 50 nm, and micropores with an average size of below 2 nm.

In the context of the present invention, the pore size of the porous graphitic matrix usually increases when sulfur is accomodated into the pores of the graphitic matrix. Thus, for example the pore size of the fibrous graphitic matrix may increase from 5 nm to 30 nm after placing sulphur into the pores.

The present invention provides different processes as suitable alternatives to prepare the composite of the invention.

### Physical method

The sulphur can be placed into the pore of the porous graphitic matrix by a physical method. The physical method provided by the present invention comprises the following steps:
a) preparing a solution of sulfur in a solvent, preferably carbon disulfide,
b) adding a fibrous graphitic porous matrix to the solution obtained from step a) to obtain a mixture, and
c) stirring the mixture obtained in step b) and evaporating the solvent to precipitate elemental sulfur into the pores of the fibrous graphitic porous matrix.

According to step a) of the physical method, a solution of sulphur is prepared in a solvent, such as carbon disulfide. The sulphur may be in form of elemental sulphur or sulphur-containing compounds such as organosulphur compounds or inorganic sulphur compounds. The concentration of sulphur in the solution of carbon sulfide is comprised between 5 and 20 % w/w. Preferably, the concentration of sulphur in the solution is about 10% w/w.

In a preferred embodiment, the solution is prepared by stirring sulphur particles in a solvent. Suitable methods of stirring include but are not limited to mechanical agitation and ultrasonication. Stirring of the components can be accomplished using a variety of conditions so long as the desired dissolution or dispersion of the components is obtained. Preferably, the solution is stirred at a rate comprised between 50 and 500 rpm, preferably between 100 and 300 rpm. Preferably, the solution is stirred at 100 rpm for 1 hour.

In step b), the porous graphitic matrix is added to the solution obtained from step a) to obtain a mixture. In a particular embodiment, the mixture obtained after the addition of the graphitic material is further stirred for 15 minutes.

In step c) the mixture obtained in step b), comprising elemental sulphur and porous graphitic matrix, is stirred and the solvent is evaporated to precipitate sulfur into the pores of the graphitic matrix.

In a particular embodiment, the mixture obtained in step b) is stirred by ultrasounds in step c) for 30 min.

According to step c), the solvent is evaporated to precipitate sulphur from the mixture obtained in step c), so that sulphur is placed into the pores of the fibrous graphitic porous matrix to form the composite. In a particular embodiment, the solvent is evaporated by heating. In a preferred embodiment, the solvent is evaporated by heating at temperatures between 40 and 50°C, more preferably at 45°C or 50°C for 24 h.

In a particular embodiment, the physical method of the invention comprises the following steps:
a) preparing a solution by adding elemental sulphur powder to carbon disulfide,
b) stirring the solution obtained from step a),
c) adding carbon nanofibers to the solution obtained from b) to obtain a mixture,
d) stirring the mixture obtained from step c) by ultrasounds, and evaporating the solvent by heating at 45°C.

The provided physical method allows preparing the composite of the invention at room temperature and does not require an inert atmosphere, with the consequent advantage of reduction in costs and time.

### Chemical method

In a particular embodiment, the invention relates to a chemical method wherein the elemental sulphur is precipitated in-situ by using a precursor. The chemical method provided by the present invention comprises the following steps:
a) preparing an aqueous solution of a chemical precursor of sulphur,
b) preparing an aqueous dispersion of a porous graphitic matrix,
c) mixing the aqueous dispersion of a graphitic matrix obtained from step b), and the aqueous solution of the chemical precursor of elemental sulphur from the step b) in the presence of an acid, to precipitate sulfur into the pores of the graphitic matrix.

According to step a) of the chemical method provided, an aqueous solution of a chemical precursor of elemental sulphur is prepared. In a particular embodiment, the chemical precursor is sodium thiosulfate or sodium sulphide. Preferably, the aqueous solution further comprises a surfactant or non-ionic tensioactive, such as Triton X-100. In a preferred embodiment the aqueous solution comprises sodium thiosulfate and Triton X-100. In a particular embodiment, the aqueous solution is prepared by stirring an aqueous solution of sodium thiosulfate and Triton X-100 at 1% at 100 rpm for 15 min.

An aqueous dispersion of a porous graphitic matrix is prepared in step b). In a particular embodiment, the aqueous dispersion is prepared by applying ultrasounds for 1 h. In an embodiment, the aqueous solution is prepared by adding 1 g of carbon nanofibers in 500 ml of distilled water, and applying low power ultrasounds for 1 h.

According to step c), the aqueous dispersion of the porous graphitic matrix obtained from step b), and the aqueous solution of the chemical precursor of elemental sulphur of step c) are mixed in the presence of an acid, to precipitate sulfur into the pores of the graphitic matrix. Preferably, the mixture is heated in an oil bath at 70°C. In a particular embodiment, the aqueous solutions are mixed in the presence of an acid. In a preferred embodiment, the aqueous solutions are mixed in the presence of an acid selected from chlorhydric acid, sulfuric acid and formic acid.

This alternative process avoids the use of solvents such as carbon disulfide having a high toxicity.

### Dry mechanical method

The sulphur can also be placed into the pores of a porous graphitic matrix in dry conditions, avoiding the use of solvents.

The dry mechanical method provided by the present invention comprises physically mixing elemental sulphur and the porous graphitic matrix, for example, by planetary ball milling.

In a preferred embodiment a small amount of solvent is used to help in the physical process. Carbon disulfide is preferred as a solvent.

### Wet mechanical method

The elemental sulphur can be placed into the pores of a porous graphitic matrix in wet conditions following a mechanical method. The wet mechanical method provided by the present invention comprises mixing elemental sulphur and the porous graphitic matrix in the presence of an organic solvent. Preferably, the organic solvent is selected from ethanol, tetrahydrofuran (THF), 1-propanol and chloroform.

For example, elemental sulphur and the porous graphitic matrix are mixed in the presence of an organic solvent by planetary ball milling at a rate comprised between 100 and 500 rpm for at least 1 h. Preferably, elemental sulphur and the graphitic materials are mixed by planetary ball milling at a rate of 300 rpm for 3 h. The mixture obtained by this method may be dried at room temperature for 12 h.

In a further aspect the invention relates to the composite obtained by anyone of the processes described above.

The composite of the present invention is useful in a wide variety of applications where materials with high surface area, electrical conductivity or low weight would be desirable. In one possible application the composite of the present invention may serve as an electrode component in a battery, such as a lithium-ion, a lithium-sulphur or a lithium-oxygen battery.

In another embodiment, the composite of the invention is used as electrode in an inductive battery, wherein the charging is carried out wireless through inductive coupling using an electromagnetic field.

Further, the composite structure of the present invention ensures a good specific capacitance performance, due to its porosity that allows the rapid electrolyte transport, and the high surface area. Considering the energy density of a capacitor is generally determined by E=CV²/2, where C is the capacitance, the composites of the present invention with high specific capacitance are of great interest for high-energy density device applications. Therefore, according to one aspect of the invention the composite of the invention is used as a supercapacitor for improved energy storage.

In another particular embodiment the electrode comprising the composite of the invention may be used in an electrochemical-energy-storage device.

In a particular embodiment the electrochemical-energy storage device is a supercapacitor comprising at least an electrode with the composite of the invention. In another particular embodiment, the supercapacitor comprises two electrodes with the composite of the invention, separated from each other by a separator and immersed in an electrolyte.

As used herein, the term "about" means a slight variation of the value specified, preferably within 10 percent of the value specified. Nevertheless, the term "about" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

The invention will be further illustrated by means of examples, which should not be interpreted as limiting the scope of the claims.

### EXAMPLES

In the examples the data corresponding to the density, diameter of pores, and specific surface area provided in the present application, are measured with a physisorption analyzer, in particular with the Accelerated Surface Area and Porosimetry System (ASAP 2020) of Micromeritics. Previously, the composite or nanofibers are heated up to 150°C at a rate of 5°C/min, and maintained at said temperature for 240 min. The composite or nanofibers are then degassed to 50 µm Hg at a rate of 1.0 mmHg/s.

The length and diameter of the nanofibers were measured by a Transmission Electron Microscope JEOL JEM 2100 at 200 kV.

### EXAMPLE 1: COMPOSITES OBTAINED BY A PHYSICAL METHOD

Composites of the present invention were prepared by a physical method comprising the following steps:
a) 60 g sulphur and 427 ml of carbon disulfide (CS₂) are introduced in a glass vessel. The mixture is stirred at 100 rpm for 1 hour to obtain a solution of 10% w/w sulphur.
b) 40 g graphene nanofibers having a diameter of 80 nm and a length between 500 nm and 2 microns are added to the mixture obtained in step a). The graphene nanofibers have a specific surface area of 300 m²/g, an average mesopore size of 5 nm, an average micropore size of 1.5 nm, and a pore volume of 0.36 cm³/g. About 90% the pore volume corresponds to mesopores and about 10 % to micropores. The mesopores represent about 85% of the specific surface area, and the micropores about 15% of the SSA. The resulting mixture is stirred for 15 min at room temperature.
c) Ultrasounds are applied to the mixture obtained in step b) for 30 minutes,
d) The solvent in the mixture obtained in step d) is evaporated by stirring the mixture obtained in step c), and
e) The mixture obtained from d) is dried by heating at 50°C.

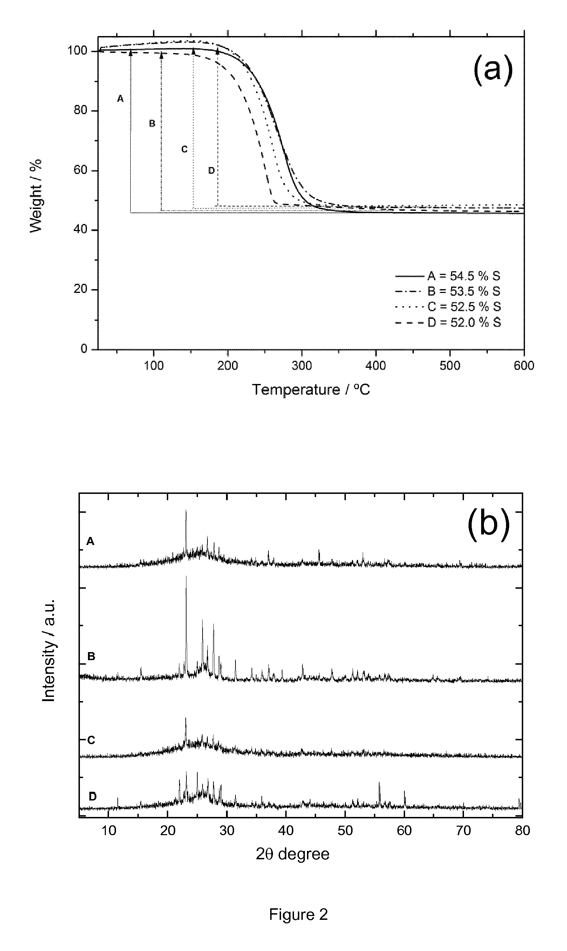

The pore volume, pore size and specific surface area of the product obtained by this method are measured using the Brunnauer-Emmet-Teller ("BET") method as described above. Further, the composition of the product obtained is also confirmed by X-Ray Difraction. Figures 2 a) and b) (A profiles) show the corresponding thermogravymetric analysis and the X-ray difraction pattern.

The composite product obtained contains about 60% w/w sulphur and about 40% w/w graphene nanofibers, a minor amount of the sulphur is lost during the process.

The composite material comprising sulphur presents a pore volume of 0.001 cm³/g, an average pore size of 30 nm and a specific surface area of 1 m²/g. Fig 1 shows the corresponding SEM image of the obtained composite.

### EXAMPLE 2: ELECTRODE PREPARATION

The electrodes are prepared by blending the composite obtained in example 1, with poly(vinylidene fluoride) (PVDF) binder, and carbon black in a weight ratio of 80:10:10 in a planetary mixer at 50 rpm for 15 min. The solids are dispersed in N-methyl-2-pyrrolidone (NMP) at a ratio of 200 g to 1 litre NMP, by stirring at a rate of 100 rpm for 24 hours.

The obtained slurry is coated on an aluminum foil of 20 µm thickness with a controlled height blade. The resulting electrode is dried by heating at 50°C for 12 h.

The electrochemical properties of the composite obtained in example 1 are measured using coin cells. 2032 coin-type cells having 20 mm diameter and 3.2 mm thickness, are assembled in an Ar-filled glovebox by stacking the as-prepared electrode as the working electrode, with a lithium foil as the counter electrode and reference electrode, a porous polyethylene film as separator (PE); and 1 M lithium bis(trifluoromethanesulfonyl)imide (LiTFSI) in 1,3-dioxolane (DOL)/dimethoxyethane (DME) (1:1 v/v) including 0.4 M LiNO₃, as electrolyte.

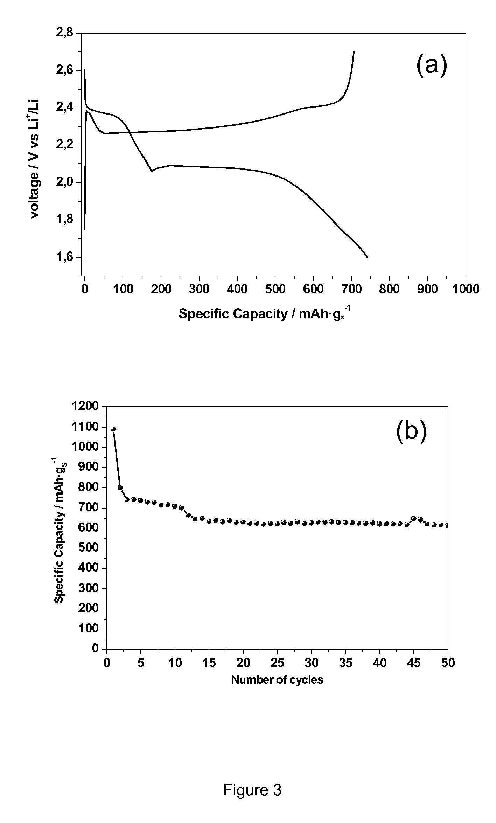

The cells were galvanostatically discharged and charged using an automatic battery testing system in order to measure the capacity of the battery and the durability with the number of cycles at different current densities. Figure 3 shows the specific capacity and the cycle performance of the composite obtained at a current density of 100 mA/g within a voltage window of 1.6-2.7 V. The discharge curves exhibit multiple stages corresponding to sequential reduction from S to Li₂S, while a simple line (overlapped) in the charge process reveals a fast oxidation process. Cycling performance of the cell at a rate of 100 mA/g is shown in Figure 3b.

The figures show that the composite comprising graphene nanofibers and elemental sulphur show a high specific capacity, of around 700 mAh/g, and that this capacity remains stable through a high number of charge-discharge cycles.

### EXAMPLE 3: COMPOSITES OBTAINED BY A PHYSICAL METHOD

Composites of the present invention were prepared by a physical method comprising the following steps:
a) 60 g sulphur and 427 ml of carbon disulfide (CS₂) are introduced in a glass vessel. The mixture is stirred at 100 rpm for 1 hour to obtain a solution of 10% w/w sulphur.
f) 40 g graphene nanofibers having an average diameter of 20 nm and a length between 1 microns and 10 microns are added to the mixture obtained in step a). The graphene nanofibers added to the mixture have a specific surface area of 130 m²/g, an average mesopore size of 10 nm, an average micropore size of 1.0 nm, and a pore volume of 0.50 cm³/g. About 95% the pore volume corresponds to mesopores and about 5 % to micropores. The mesopores also represent about 95% of the specific surface area, and the micropores about 5% of the SSA.
   The resulting mixture is stirred for 15 min at room temperature.
b) Ultrasounds are applied to the mixture obtained in step b) for 30 minutes,
c) The solvent in the mixture obtained in step d) is evaporated by stirring the mixture obtained in step c), and
d) The mixture obtained from d) is dried by heating at 50°C.

The obtained composite product is 100 g of a material containing about 60%w/w sulphur and about 40% w/w graphene nanofibers. The composite material presents a pore volume of 0.05 cm³/g, an average pore size of 35 nm and a specific surface area of 7 m²/g.

The pore volume, pore size and specific surface area of the product obtained are measured as described above. Further, the composition of the product obtained is also confirmed by X-Ray Diffraction.

### EXAMPLE 4: ELECTRODE

The electrodes are fabricated by blending the composite of example 3 with poly(vinylidene fluoride) (PVDF) binder and carbon black in a weight ratio of 80:10:10 in a planetary mixer at 50 rpm for 15 min. The solids are dispersed in N-methyl-2-pyrrolidone (NMP) at a ratio of 200 g to 1 I NMP, by stirring at a rate of 100 rpm for 24 hours.

The obtained paste or slurry is deposited on an aluminum foil of 20 µm thickness with a controlled height blade. The resulting electrode is dried by heating at 50°C for 12 h.

The electrochemical properties of the composite obtained in example 3 are measured using coin cells. 2032 coin-type cells having 20 mm diameter and 3.2 mm thickness, are assembled in an Ar-filled glovebox having less than 1 ppm humidity and oxygen, and by stacking the as-prepared electrode as the working electrode, with Li foil as the contour electrode and reference electrode, a porous polyethylene film as separator (PE), and 1M lithium bis(trifluoromethanesulfonyl)imide (LiTFSI) in 1,3-dioxolane (DOL)/dimethoxyethane (DME) (1:1 v/v) including 0.4 M LiNO3.

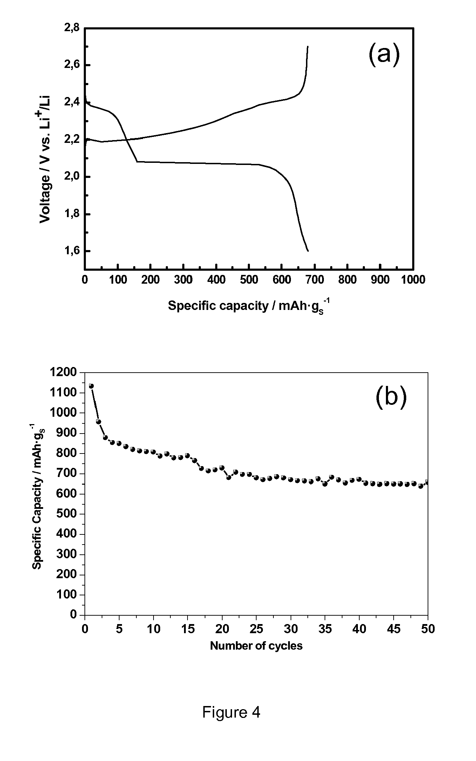

The cells were galvanostatically discharged and charged using an automatic battery testing system in order to measure the capacity of the battery and the durability with the number of cycles at different current densities. Figure 4 shows the measured discharge and charge specific capacity of the composite at a current density of 100 mA/g within a voltage window of from 1.6 to 2.7 V.

As in example 2, the figures show that the composite comprising graphene nanofibers of about 20 nm diameter and elemental sulphur show a high specific capacity, and that this capacity remains stable through a high number of charge-discharge cycles, although a bit less that with the nanofibers of example 2.

### EXAMPLE 5: COMPOSITES OBTAINED BY A CHEMICAL METHOD

Composites of the present invention were prepared by a chemical method comprising the following steps:
a) 8 g of sodium thiosulfate (Na₂SO₃·5H₂O), 10 ml of 1% v/v Triton X-100, and 500 ml of distilled water are introduced in a glass vessel and stirred at a rate of 100 rpm for 15 min.
b) 1 g of carbon nanofibers having a diameter of 80 nm and a length between 500 nm and 2 microns, and an average mesopore size of 5 nm, an average micropore size of 1 nm, and a pore volume of 0.36 cm³/g, and 500 ml of distilled water are introduced in an additional glass vessel, and low power ultrasounds are applied to the mixture for 1 h.
c) The dispersion of carbon nanofibers obtained from step b) is added to the solution from step a), and the resulting mixture is heated in an oil bath at 70°C.
d) 50 ml of chlorhydric acid (35%) is added to the mixture from step c) while stirring at 100 rpm. The stirring is maintained for 24 h.
e) The mixture obtained from step d) is filtered in vacuum and washed in distilled water, ethanol and acetone to separate a filtrate.
f) The filtrate obtained is dried by heating at 80°C for 12 h.

The process yields 2 g of composite, wherein about 60% w/w corresponds to sulphur and about 40% w/w corresponds to the carbon nanofibers. The pore volume, pore size and specific surface area of the product obtained, are measured using the Brunnauer-Emmet-Teller ("BET") method of physical adsorption as described above. The properties of the composite are very similar to those of example 1. Further, the composition of the product obtained is also confirmed by X-Ray Diffraction. Figures 2 a) and b), (B profiles) show the corresponding thermogravimetric analysis and the X-ray diffraction pattern.

### EXAMPLE 6: COMPOSITES OBTAINED BY A DRY MECHANICAL METHOD

Composites of the present invention were prepared by a dry mechanical method comprising the following steps:
a) 0.6 g of powder sulphur and 0.4 g of carbon nanofibers having a diameter of 80 nm, a length between 500 nm and 2 microns, a specific surface area of 300 m²/g, an average mesopore size of 5 nm, an average micropore size of 1 nm, and a pore volume of 0.36 cm³/g are introduced in a 50 ml-agate container,
b) Mixing the mixture in a ball milling at a rate of 300 rpm for 3 hours with reversal turn every 15 min, and
c) Heating the mixture at 50°C for 12 h.

The process yields 1 g of composite containing about 60% w/w of sulphur and about 40% w/w of carbon nanofibers. The pore volume, pore size and specific surface area of the product obtained, are measured as described above. Figures 2 a) and b), (C profiles) show the corresponding thermogravimetric analysis and the X-ray diffraction pattern.

### EXAMPLE 7: COMPOSITES OBTAINED BY A WET MECHANICAL METHOD

Composites of the present invention were prepared by a wet mechanical method comprising the following steps:
a) 2.4 g of powder sulphur and 1.6 g of carbon nanofibers having a diameter of 80 nm and a length between 500 nm and 2 microns, a specific surface area of 300 m²/g, an average mesopore size of 5 nm, an average micropore size of 1 nm, and a pore volume of 0.36 cm3/g, are introduced in an 50 ml-agate container,
b) 10 ml of ethanol are added to the mixture obtained from a),
c) Mixing the mixture in a ball milling at a rate of 300 rpm for 3 hours with reversal turn every 15 min, and
d) Drying the mixture at room temperature for 12 h., and
e) Ground the mixture from step d) in an agate mortar.

The process yields 4 g of composite containing about 60% w/w of sulphur and about 40% w/w of carbon nanofibers. The pore volume, pore size and specific surface area of the product obtained, are measured as described above. Further, the composition of the product obtained is also confirmed by X-Ray Difraction. Figures 2 a) and b), (D profiles) show the corresponding thermogravimetric analysis and the X-ray diffraction pattern.

### EXAMPLE 8: ELECTRODE

Electrodes are fabricated by blending the composite obtained from examples 5, 6 or 7, with poly(vinylidene fluoride) (PVDF) binder and carbon black in a weight ratio of 80:10:10 in a planetary ball milling at 50 rpm for 15 min. The solids are dispersed in N-methyl-2-pyrrolidone (NMP) at a ratio of 200 g to 1 l NMP, by stirring at a rate of 100 rpm for 24 hours.

The obtained paste or slurry is coated on an aluminum foil of 20 µm thickness with a controlled height blade. The resulting electrode is dried by heating at 50°C for 12 h.

## Claims

1. A composite obtainable by placing elemental sulphur into the pores of a porous graphitic matrix comprising mesopores with an average size of between 2 and 50 nm, and micropores with an average size of below 2 nm, wherein the graphitic matrix before loading with sulphur has a specific surface area comprised between 100 and 500 m²/g.

2. The composite according to claim 1, wherein the porous graphitic matrix is selected from carbon nanofibers, carbon nanorods, carbon nanowires or carbon nanotubes, and combinations thereof.

3. The composite according to claim 2, wherein the porous graphitic matrix is carbon nanofibers, preferably graphene nanofibers.

4. The composite according to claim 3 wherein the carbon nanofibers have an average diameter comprised between 5 and 200 nm, and a length comprised between 500 nm and 5 µm.

5. The composite according to anyone of claims 1 to 4, wherein the pore volume of the porous graphitic matrix before loading with sulphur is comprised between 0,2 and 1,0 cm³/g, preferably between 0.3 and 0.8 cm³/g, more preferably between 0.3 and 0.5 cm³/g.

6. The composite according to claim 5, wherein the pore volume of the micropores of the porous graphitic matrix before loading with sulphur is comprised between 5 and 10 % v/v of the total pore volume of the graphitic matrix.

7. The composite according to anyone of claims 1 to 6, wherein the specific surface area of the porous graphitic matrix before loading with sulphur is comprised between 200-400 m²/g, preferably between 250-350 m²/g.

8. The composite according to anyone of claims 1 to 7, wherein the specific surface area of the composite loaded with elemental sulphur is comprised between 0.1 and 10 m²/g, preferably between 0.5 and 2 m²/g.

9. The composite according to anyone of claims 1 to 8, wherein the pore volume of the composite loaded with elemental sulphur is comprised between 0.0001 and 0.01 cm³/g.

10. A composite paste comprising the composite according to anyone of claims 1 to 9, a conductive additive, and a binder, preferably comprising from about 70% to about 90% w/w of the composite, from about 5% to about 15% w/w of the conductive additive, and from about 5% to about 15% w/w of the binder.

11. An electrode comprising the composite according to anyone of claims 1-9 and a metallic support, wherein the metallic support is preferably selected from the group consisting of metal films, metal foils, metal nets and expanded metal grids, or combinations thereof.

12. A battery comprising a cathode comprising the composite according to anyone of claims 1 to 9, and an anode comprising lithium or a lithium-containing material.

13. A process to prepare the composite according to anyone of claims 1 to 9, comprising the step of placing sulphur into the pores of a porous graphitic matrix comprising mesopores with an average size of between 2 and 50 nm, and micropores with an average size of below 2 nm, and having a specific surface area comprised between 100 and 500 m²/g.

14. A process according to claim 13, comprising the following steps:
a) preparing a solution of elemental sulfur in a solvent, preferably carbon disulfide,
b) adding the graphitic porous matrix to the solution obtained from step a) to obtain a mixture, and
c) stirring the mixture obtained in step b) and evaporating the solvent to precipitate sulfur into the pores of the graphitic porous matrix.

15. Process according to claim 13, comprising the following steps:
a) preparing an aqueous solution of a chemical precursor of sulphur,
b) preparing an aqueous dispersion of the graphitic porous matrix, and
c) mixing the aqueous solution from step a) and the aqueous dispersion from step b), in the presence of an acid, to precipitate sulfur into the pores of the graphitic porous matrix.

16. Process according to claim 13, comprising the step of mixing solid elemental sulphur particules and the graphitic porous matrix by ball milling.

17. Process according to anyone of claims 13-16, wherein the graphitic porous matrix is carbon nanofiber, preferably graphene nanofiber.

18. Use of the composite according to anyone of claims 1 to 9 as an electrode for batteries, preferably an electrode for lithium batteries or lithium-ion batteries.
